# EUROPEAN PATENT APPLICATION

(11) **EP 1 944 623 A2**
(43) Date of publication of application: **16.07.2008**
(21) Application number: 07150216.5
(22) Date of filing: 20.12.2007
(51) Int. Cl.: G01T 1/16

(54) **Radiation image detecting device and radiation image radiographing system**

(30) Priority: 12.01.2007 JP 2007004413; 16.02.2007 JP 2007036058
(71) Applicant: Konica Minolta Medical & Graphic, Inc., Hino-shi, Tokyo 191-8511 (JP)
(72) Inventor: Eguchi, Yoshihiko, c/o Konica Minolta Medical & Graphic, Inc., Tokyo 191-8511 (JP)
(74) Representative: Gille Hrabal Struck Neidlein Prop Roos

(57) **Abstract**

A radiation image detecting device is provided with a flat panel detector constituted with a plurality of elements arranged in a plane configuration so as to detect radiation having transmitted through a radiographic subject; a signal processing section to process signals outputted from the flat panel detector; a radiation shielding section to shield the signal processing section from radiation having transmitted through the flat panel detector; a power source section to supply electric power to the flat panel detector and the signal processing section; and a non-contact power receiving section to receive electric power supplied with a non-contact way in a form of a magnetic flux and to supply the electric power to the power source section. The non-contact power receiving section is arranged on a location where the magnetic flux is not blocked by the radiation shielding section.

## Description

This application is based on Japanese Patent Application No. 2007-004413 filed on January 12, 2007, and Japanese Patent Application No. 2007-036058 filed on February 16, 2007, in Japanese Patent Office, the entire contents of which are hereby incorporated by reference.

### BACKGROUND OF THE INVENTION

The present invention relates to a radiation image detecting device and a radiation image radiographing system.

Conventionally, in medical diagnostics, a radiographic subject is irradiated with radiation, such as X-rays, and a radiation image obtained by the detection of the intensity distribution of radiation having transmitted through the radiographic subject has been used widely. In recent years, there has been developed a radiation image radiographing system employing a FPD (Flat Panel Detector) as a radiation image detecting device which detects radiation at the time of radiographing, converts the radiation into electrical signals and obtains radiation image information.

In this radiation image radiographing system, in order to increase a degree of freedom of a system configuration, there has been know a system structured such that a FPD is arranged in a radiographing room and is used by being connected with a console such as a personal computer to operate the FPD via a predetermined communication line.

Moreover, there has been proposed a cassette type radiation image detecting device in order to increase an improvement in conveying and in handling a radiation image detecting device (for example, refer to Patent documents 1: Japanese Patent Unexamined Publication No. 6-342099).

Although a battery is accommodated in such a cassette type radiation image detecting device, a battery charger is needed to be connected to the device at every time of charging up electricity for the battery. Accordingly, this operation is troublesome. Then, there has been proposed another type in which a battery is structured to be attached to or detached freely from a cassette type radiation image detecting device, and the battery is charged electrically by the use of a non-contact power charging device (for example, refer to Patent documents 2: Japanese Patent Unexamined Publication No. 2001-224579). Moreover, there has been proposed a method of supplying electric power with a non-contact way by a magnetic coupling formed between a primary side coil provided to a power transmitting device and a secondary side coil provided to a power receiving device (for example, Patent documents 3: Japanese Patent Unexamined Publication No. 2006-141170, Patent documents 4: Japanese Patent Unexamined Publication No. 2005-110357).

However, there are the following restrictions in non-contact power charging for the radiation detection device (especially, a cassette type radiation image detecting device corresponding to a portable radiography), and a sufficient performance could not be obtained with the non-contact power charging in which a primary coil and a secondary coil are arranged to oppose to each other as disclosed in Patent Documents 3 and 4.

That is, a shielding member for preventing radiation from scattering is built in the radiation detecting device, and if the secondary side coil is installed in the radiation detecting device, a part of lines of magnetic force may be interrupted by the shielding member. Similarly, if a shielding member and a secondary coil are made in close contact in order to reduce the thickness of a case body, a part of lines of magnetic force will be interrupted by the shielding member. In order to avoid the interruption, if the secondary coil is installed extensively as disclosed by Patent Document 3, there is a problem that an apparatus becomes to be enlarged.

Moreover, a peripheral side of a radiation detecting device is filled up with a shock absorbing material for protecting a detection panel from impacts caused by drop and so on, and if a secondary coil is made to face to the peripheral as disclosed by Patent Document 4, a sufficient magnetic flux density may not be obtained. Furthermore, when the external entire size of a case body has a limitation, in order to secure an area for a coil and a magnetic circuit, a reduction of a valid imaging region will be caused.

### SUMMARY

The present invention has been made in view of the above-mentioned problems and an object of the present invention is to provide a radiation image detecting device capable of conducting a non-contact electrical charging efficiently, without enlarging the size, lowering a radiation shielding performance, and lowering shock-proof.

The above object can be attained with the following structures to which one aspect of the present invention is reflected.

A radiation image detecting device, comprises:
a flat panel detector constituted with a plurality of elements arranged in a plane configuration so as to detect radiation having transmitted through a radiographic subject;
a signal processing section to process signals outputted from the flat panel detector;
a radiation shielding section to shield the signal processing section from radiation having transmitted through the flat panel detector;
a power source section to supply electric power to the flat panel detector and the signal processing section; and
a non-contact power receiving section to receive electric power supplied with a non-contact way in a form of a magnetic flux and to supply the electric power to the power source section;
wherein the non-contact power receiving section is arranged on a location where the magnetic flux is not blocked by the radiation shielding section.

### BRIEF DESCRIPTION OF THE DRAWINGS

Fig. 1 is a figure showing an outline structure of one embodiment of a radiation image radiographing system 1 applied with a radiation image detecting device 6 according to the present invention.
Fig. 2 is a block diagram of the radiation image detecting device 6 and the cradle 51 according to the present invention.
Fig. 3 is an outline view of the radiation image detecting device 6 and the cradle 51 according to the present invention.
Fig. 4 is a sectional view of the radiation image detecting device 6 and the cradle 51 according to the present invention.
Fig. 5 is a circuit diagram showing an outline structure of an electric charging circuit 45 of the radiation image detecting device 6.
Fig. 6 is a schematic diagram for explaining a condition that the non-contact power transmitting section 52 and the non-contact power receiving section 46 form a magnetic coupling.
Fig. 7(a) is a conceptual diagram for explaining a configuration of the radiation image detecting device 6 in the first embodiment of the present invention.
Fig. 7(b) is a sectional view of the part indicated wit A-A in Fig. 7 (a).
Fig. 8(a) is a conceptual diagram for explaining a configuration of the radiation image detecting device 6 in the second embodiment of the present invention.
Fig. 8(b) is a sectional view of the same part as the part indicated with A - A in Fig. 7 (a).
Fig. 9(a) is a conceptual diagram for explaining a configuration of the radiation image detecting device 6 in the third embodiment of the present invention.
Fig. 9(b) is a sectional view of the same part as the part indicated with A - A in Fig. 7 (a).
Fig. 10 is a sectional view of the radiation image detecting device 6 and another embodiment of a cradle 51.

### DETAILED DESCRIPTION OF THE PREFERRED EMBODIMENT

Hereinafter, preferable embodiments of the present invention are explained, however, the present invention is not limited to these preferable embodiments.

Firstly, preferable memory administrating methods to attain the above objects are explained.
Item 1. A radiation image detecting device comprises:
   a flat panel detector constituted with a plurality of elements arranged with a plane configuration so as to detect radiation having transmitted through a radiographic subject;
   a signal processing section to process signals outputted from the flat panel detecting device;
   a radiation shielding section to shield the signal processing section from radiation having transmitted through the flat panel detector;
   a power source section to supply electric power to the flat panel detector and the signal processing section; and
   a non-contact power receiving section to receive electric power converted into a magnetic flux and supplied with a non-contact way and to supply the electric power to the power source section;
   wherein the non-contact power receiving section is arranged in a location where the magnetic flux is not blocked by the radiation shielding section.
Item 2. A radiation image radiographing system comprises:
   a flat panel detector constituted with a plurality of elements arranged with a plane configuration so as to detect radiation having transmitted through a radiographic subject;
   a signal processing section to process signals outputted from the flat panel detecting device;
   a power source section to supply electric power to the flat panel detector and the signal processing section;
   a non-contact power transmitting section to transmit electric power converted into a magnetic flux;
   a non-contact power receiving section to receive the electric power converted into the magnetic flux and transmitted from the non-contact power transmitting section with a non-contact way and to supply the electric power to the power source section; and
   a radiation shielding section to shield the signal processing section from radiation having transmitted through the flat panel detector and arranged at a position where the radiation shielding section does not block the magnetic flux generated between the non-contact power transmitting section and the non-contact power-receiving section.
Item 3. In the radiation image radiographing system described in Item 2, the radiation image radiographing system further comprises a case body to accommodate the flat panel detector, the signal processing section, the power source section, the non-contact power receiving section and the radiation shielding section therein and a case body holding section having a structure to hold the case body detachably and the non-contact power transmitting section including magnetic field forming section provided at a position to sandwich the case body when the case body holding section holds the case body.
   According to the present invention, since the non-contact power receiving section is arranged on a location of the radiation image detecting device where the non-contact power receiving section is not covered by the shielding member to block radiation, magnetic field for charge electricity is not interrupted and non-contact charging can be performed efficiently.
Item 4. A non-contact electric power feeding system comprises:
   a pair of magnetic field forming sections arranged opposite to each other so as to form a gap therebetween and to form a magnetic field in the gap by being supplied with electric power; and
   a non-contact electric power receiving section to receive electric power supplied by electromagnetic induction from the magnetic field formed by the pair of magnetic field forming sections when being placed in the gap formed by the pair of magnetic field forming sections.

In the non-contact electric power feeding system described in Item 4, the non-contact electric power feeding system comprises a case body accommodating the non-contact electric power receiving section therein and a case body holding section accommodating the magnetic field forming sections therein and to hold the case body detachably,
wherein the magnetic field forming sections are arranged opposite to each other so as to sandwich the case body held the case body holding section, and non-contact electric power receiving section is placed in the gap formed by the pair of magnetic field forming sections when the case body is held by the case body holding section.

According to the present invention, since the non-contact electric power receiving section is placed at a position where the non-contact electric power receiving section is sandwiched between a pair of the magnetic field forming sections (non-contact electric power transmitting section) arranged opposite to each other in the case body holding section when the case body is held by the case body holding section, magnetic fields don't leak or be not blocked off, whereby a non-contact electrical charging can be conducted efficiently.

Hereafter, an embodiment of the present invention is explained with reference to drawings.

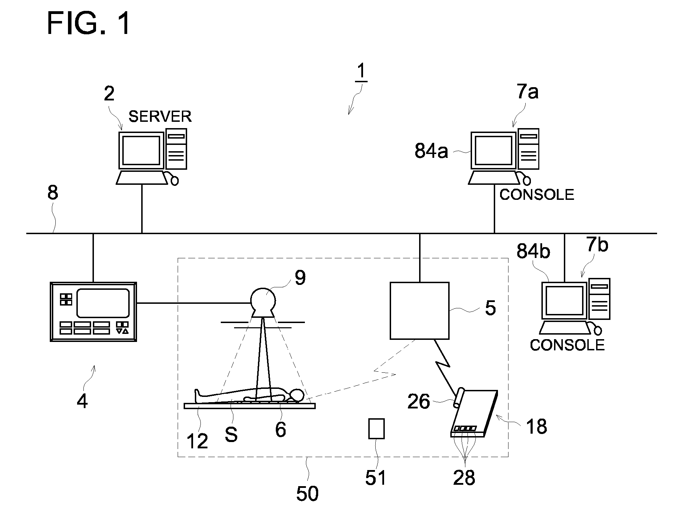

Fig. 1 is a drawing showing an outline structure of one embodiment of a radiation image radiographing system 1 to which a radiation image detecting device 6 according to the present invention is applied.

The radiation image radiographing system 1 according to this embodiment is a system to perform an image radiography by using radiation such as X-rays, and as shown in Fig. 1, the radiation image radiographing system 1 is structured such that a server 2 which manages information about radiation image radiography; a radiation irradiation operating device 4 to perform an operation about radiation irradiation; a base station 5 to perform communication by a wireless communication method such as a wireless LAN (Local Area Network) as one example, consoles 7a and 7b to manage a radiographing room 50 and to operate a radiation image detecting device 6 installed in the radiographing room 50 are connected through a network 8 so as to be able to transmit and receive information mutually. To the radiation irradiation operating device 4 is connected through a cable a radiation tube 9 to irradiate with radiation to a patient S who is a radiography subject on a bed 12. In this connection, although radiation used for radiography is not limited to X-rays, the X-rays may used most suitably. When X-rays are used for radiography, an X-ray tube to irradiate X-rays is used as the above-mentioned radiation tube 9.

A cradle 51 explained in detail later is a battery charger to charge a power source section 44 of the radiation image detecting device 6 which is not illustrated in Fig. 1, and the cradle 51 is shaped in a configuration to hold the radiation image detecting device 6.

The consoles 7a and 7b are a personal computer, and are equipped with a CPU, a memory, a large capacity memory, a mouse, and display sections 84a and 84b, etc.

A radiographer operates an input operating section 28 of an input operating terminal 18 and inputs information required for radiography, such as ID information of a patient S. The inputted information is transmitted to the base station 5 from a communicating section 26 and is transmitted to the consoles 7a and 7b.

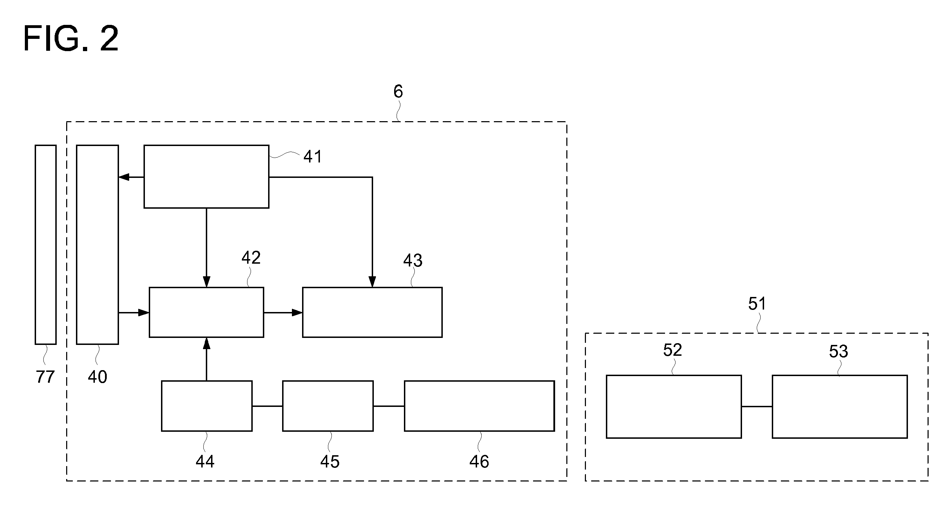

Next, the radiation image detecting device 6 and the cradle 51 according to the present invention are explained with reference to Fig. 2, Fig. 3, and Fig. 4.

In this regard, in the following description, the same reference number is given to the same functional element, and the description about it is omitted.

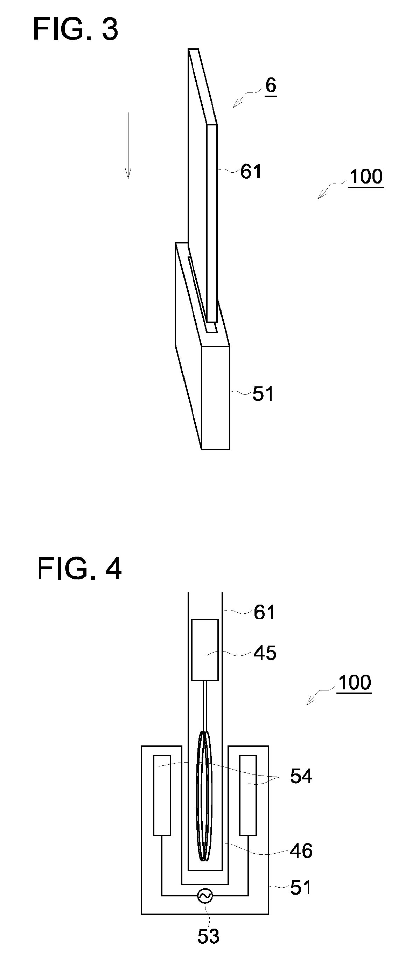

Fig. 2 is a block diagram of the radiation image detecting device 6 and cradle 51 according to the present invention, Fig. 3 is an outline view of the radiation image detecting device 6 and cradle 51 according to the present invention, and Fig. 4 is a sectional view of the radiation image detecting device 6 and a cradle 51 according to the present invention.

As shown in the block diagram of Fig. 2, the radiation image detecting device 6 is structured with a FPD 40, a timing controller 41, a signal processing section 42, a communicating section 43, a power source section 44, an electric charging circuit 45, and a non-contact power receiving section 46, for example.

Radiation (X-rays) emitted from the radiation tube 9 passes a patient S, and the transmitted X-rays are converted into fluorescence in a visible light region by a scintillator 77. The FPD 40 has detecting elements which are arranged in a matrix form with a plane configuration and are not illustrated. The detecting elements of the FPD 40 are structured with a photodiode etc. and each of the detecting elements converts fluorescence into electric signals. The electric signals converted by each of the detecting elements are read in synchronization with timing signals outputted from a timing controller 41, are subjected to a predetermined process, and are outputted sequentially as image signals. The image signals are converted into digital values (digital signals) in a signal proceesing section 42 and become image data, and the image data ae transmitted to the base station 5 from the communicating section 43.

Incidentally, although a indirect conversion method employing a scintillator 77 is explained in this embodiment, the present invention is not limited to the indirect conversion method, and the present invention can be applied also to a direct conversion method.

The power source section 44 may be a chargeable secondary battery such as a lithium ion battery, or a power storage element such as an electrical double layer capacitor, and supplies power to each section, such as the signal processing section 42 of the radiation image detecting device 6 and the FPD 40. The power receiving section 46 is structured with a coil to convert a magnetic field into an electric current, and an electric charging circuit 45 rectifies the electric current generated by the non-contact power receiving section 46, and charges the power source section 44 by a constant current, for example. Moreover, the electric charging circuit 45 has a function to prevent an overcharge by stopping charging upon detection that the power source section 44 is charged to a predetermined voltage.

The FPD 40 is a flat-panel detecting element of the present invention, the signal analysis section 42 is a signal processing section of the present invention, the power source section 44 is a power source section of the present invention, and the non-contact power receiving section 46 is a non-contact power receiving section of the present invention.

Next, the cradle 51 is explained. As shown in the block diagram of Fig. 2, the cradle 51 is structured with a cradle power source 53 and a non-contact power transmitting section 52. The cradle power source 53 is a well-known circuit to generate an alternating voltage with high frequency by switching commercial power and to apply alternating voltage to the non-contact power transmitting section 52 structured with coils.

When the radiation image detecting device 6 is charged, a case body 61 of the radiation image detecting device 6 is intercalated in the arrow-marked direction in Fig. 3 into a concave portion provided to the cradle 51. The concave portion of the cradle 51 is provided with the dimension capable of holding the case body 61 detachably.

The case body 61 is the case body of the present invention, the cradle 51 is the case body holding section of the present invention, the non-contact power transmitting section 52 is the non-contact power transmitting section of the present invention, and the non-contact power receiving section 46 is the non-contact power receiving section of the present invention.

Fig. 4 is a sectional view showing a condition that the radiation image detecting device 6 is intercalated and the radiation image detecting device 6 was held by the cradle 51.

A pair of magnetic field forming sections 54a and 54b of the non-contact power transmitting section 52 is provided in the cradle 51 so as to sandwich the inserted case body 61 of the radiation image detecting device 6, and when the cradle 51 holds the radiation image detecting device 6, magnetic flux generated by the non-contact power transmitting section 52 passes through the non-contact power receiving section 46. Therefore, the non-contact power transmitting section 52 and the non-contact power receiving section 46 constitute a transformer in which the non-contact power transmitting section 52 acts as a primary side coil and the non-contact power receiving section 46 acts as a secondary side coil. The pair of magnetic field forming sections 54a and 54b is a magnetic forming section of the present invention.

In this manner, since the pair of magnetic field forming sections 54a and 54b being a primary side coil is provided so as to oppose to each other, a magnetic flux don't leak toward the outside and passes through the non-contact power receiving section 46 being a secondary side coil, whereby a power can be generated efficiently on the secondary side coil. Further, there is no possibility that the magnetic flux leaks and provided bad influence for other medical inspection devices and medical diagnosis devices. Still further, since the magnetic field forming sections 54a and 54b are built in the cradle 51, there is almost no risk that a magnetic field leaks, and heat generated by the magnetic field forming sections 54a and 54b may be hardly transferred to the outside.

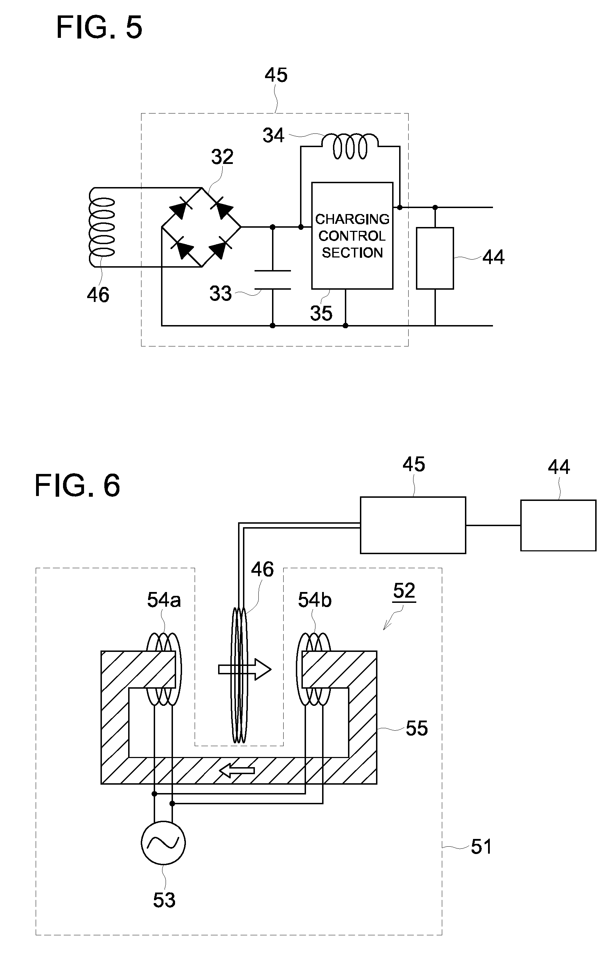

Fig. 5 is a circuit diagram showing an outline structure of the electric charging circuit 45 of the radiation image detecting device 6.

The electric charging circuit 45 is structured with a rectifier 32, a capacitor 33 for smoothing, a coil 34, a charging control circuit 35, etc. When the radiation image detecting device 6 is accommodated in the cradle 51 as shown in Fig. 4, the non-contact power transmitting section 52 acting as the primary side coil and the non-contact power receiving section 46 acting as the secondary side coil form a magnetic coupling, whereby an alternating voltage is induced at both ends of the non-contact power receiving section 46. The induced alternating voltage is smoothed by the rectifier 32, the capacitor 33 for smoothing and the coil 34. The charging control circuit 35 charges the power source section 44 by using the smoothed voltage.

Fig. 6 is a conceptual diagram for explaining the condition that the non-contact power transmitting section 52 and the non-contact power receiving section 46 form a magnetic coupling.

In the inside of the cradle 51 is equipped with the cradle power source 53 and the non-contact power transmitting section 52 structured with a core 55 and magnetic field forming sections 54a and 54b. The core 55 is made of a permalloy type magnetic material, and a part the core 55 is shaped in a concave (void) to sandwich the non-contact power receiving section 46 of the radiation image detecting device 6 inserted in the cradle 51 as shown in Fig. 6.

The magnetic field forming sections 54a and 54b are provided opposite to each other at the both sides of the concave of the core 55 to sandwich the non-contact power receiving section 46. The magnetic field forming sections 54a and 54b are, for example, coils, and are connected to the cradle power source 53 respectively and are applied with an alternating voltage.

The arrow marks shown in Fig. 6 indicate a magnetic circuit formed by magnetic flux generated by the magnetic field forming sections 54a and 54b. The magnetic flux generated by the magnetic field forming sections 54a and 54b passes the non-contact power receiving section 46 inserted in the gap of the concave portion provided in the core 55, and passes through the inside of a core 55, thereby forming a closed magnetic circuit.

In this connection, since an alternating voltage is applied to the magnetic field forming sections 54a and 54b, the direction of the magnetic flux indicated with the arrow marks is reversed alternately according to the frequency of the alternating voltage.

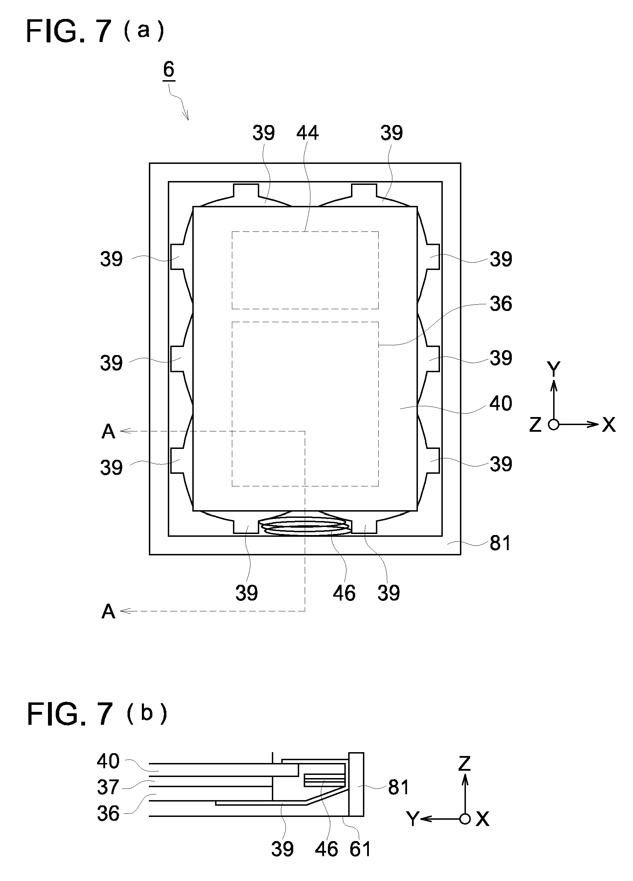

Fig. 7 is a schematic diagram for explaining a configuration of the radiation image detecting device 6 in the first embodiment of the present invention. Fig. 7 (a) is a plan view at the surface side to oppose the radiation tube 9 of the radiation image detecting device 6, and is illustrating a condition that a part of a case body 61 to cover the FPD 40 is eliminated in order to explain an internal structure.

Directions and orientations are indicated by the proper use of a XYZ three-dimensional orthogonal coordinate system shown in Fig. 7. Here, the Z axial direction is the thickness direction of the radiation image detecting device 6, and the Z-axis positive direction is the direction toward the location where the radiation tube 9 is arranged and radiation is irradiated toward the Z-axis negative direction.

The perimeter of the case body 61 of the radiation image detecting device 6 is structured with a cushioning member 81 made of materials, such as rubber. The FPD 40 is arranged inside the cushioning member 81 and a FPC (Flexible Print Circuit) 39 to connect the FPD 40 and the circuit board 36 is arranged at a gap portion between the FPD 40 and the cushioning member 81. The circuit board 36 is a substrate on which the timing controller 41, the signal processing section 42, the communicating section43, the power source section 44, and the electric charging circuit 45 are mounted.

Fig. 7 (b) is a sectional view of the part indicated wit A-A in Fig. 7 (a).

A lead sheet 37 is arranged at the back side (the Z-axis negative direction) of the FPD 40 as shown in Fig. 7 (b) so as to block or cut off radiation in order to avoid the trouble that radiation emitted from the radiation tube 9 penetrates the FPD 40 and causes malfunction of the signal processing section 42. The lead sheet 37 is the radiation shielding section of the present invention. The circuit board 36 and the power source section 44 which is not illustrated in Fig. 7 (b) are arranged under the lead sheet 37.

The FPC 39 connects the FPD 40 with the circuit board 36 in such a way that a bending angle does not become sudden as shown in Fig. 7 (b). The non-contact power receiving section 46 is arranged in the gap portion of the FPD 40 at the location which is not covered with the lead sheet 37 to interrupt magnetic flux for charging as shown in Figs. 7(a) and 7 (b). When the radiation image detecting device 6 is inserted in the cradle 51, a charging magnetic flux generated in the cradle 51 pierces through the radiation image detecting device 6 in the Z axial direction and will induces a voltage in the non-contact power receiving section 46.

With this arrangement of the non-contact power receiving section 46, since the non-contact power receiving section 46 can receive power by the charging magnetic flux generated in the cradle 51, an efficient non-contact charging can be performed without lowering the radiation shielding performance of the radiation image detecting device 6. Moreover, since the non-contact power receiving section 46 can be arranged even if the cushioning member 81 is provided in the radiation image detecting device 6, an efficient non-contact charging can be performed without being accompanied with an enlargement of the radiation image detecting device 6 and lowering the shock-proof of the radiation image detecting device 6.

Furthermore, since the non-contact power receiving section 46 generating heat by non-contact charging can be arranged in a location isolated from the circuit board 36 on which a memory and a control circuit comparatively weak to heat are mounted, the degree of freedom for a measure to counter against heat to the memory and the control circuit can be increased. Furthermore, since it may be permissible to apply counter measures for heat (deformation, heat conduction) only around the non-contact power receiving section 46, the saving of a heat resisting material and an improvement in a degree of freedom of a design can be realized. Moreover, there is an advantage capable of designing a case body thinly.

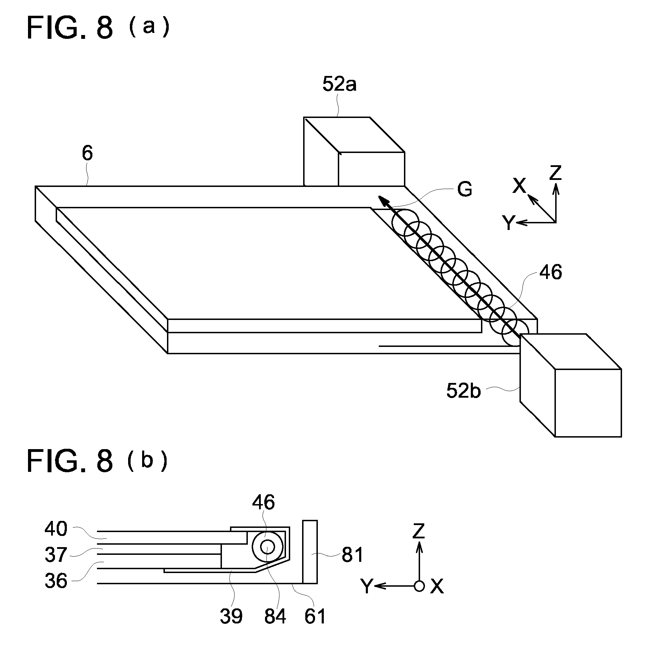

Fig. 8 is a conceptual diagram for explaining a configuration of a radiation image detecting device 6 in the second embodiment of the present invention.
Fig. 8 (a) is a perspective view of the radiation image detecting device 6 for explaining operational principle at the time of charging, and Fig. 8 (b) is a sectional view of the same part as the part indicated with A - A in Fig. 7 (a).

Directions and orientations are indicated with the appropriate use of a XYZ three-dimensional orthogonal coordinate system shown in Fig. 8 as same as Fig. 7.

A difference between the second embodiment and the first embodiment is in that the non-contact power receiving section 46 is arranged so that voltage is induced from magnetic flux penetrating in an X axial direction as shown with an arrow direction G in Fig. 8 (a). The non-contact power transmitting sections 52a and 52b sandwich the non-contact power receiving section 46, and generate a magnetic flux in the X axial direction.

The non-contact power receiving section 46 is a coil wound around an axis of the core 84 as shown in Fig. 8 (b). Although an iron core is used as the core 84 as one example, an empty core may be used as it. In this manner, the non-contact power receiving section 46 is arranged in a gap portion of the FPD 40 at the location which is not covered with the lead sheet 37 which interrupts a magnetic flux for charging, as shown in Figs. 8(a) and 8(b).

In the second embodiment, it is easier to use the core 84 than the first embodiment, and since the number of turns of the coil of the non-contact power receiving section 46 can be increased, it can charge electricity more efficiently.

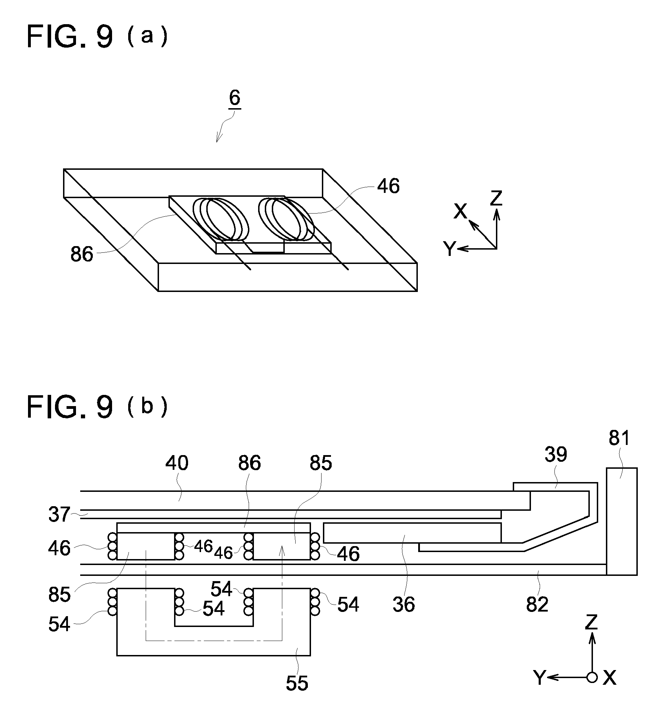

Fig. 9 is a conceptual diagram for explaining a configuration of the radiation image detecting device 6 in the third embodiment of the present invention. Fig. 9 (a) is a perspective view of the radiation image detecting device 6 for explaining a rough arrangement of the non-contact power receiving section 46, and Fig. 9 (b) is a sectional view of the same part as the part indicated with A-A in Fig. 7 (a).

Directions and orientations are indicated with the appropriate us of an XYZ three-dimensional orthogonal coordinate system shown in Fig. 9, as same as Fig. 8.

A difference between the third embodiment and the first embodiment is in that the non-contact power receiving section 46 is arranged in a central section of the radiation image detecting device 6, as shown in Fig. 9 (a). Since the lead sheet 37 is arranged in the central section of the radiation image detecting device 6 as mentioned above, a magnetic flux cannot penetrate the radiation image detecting device 6 in a Z axial direction. Therefore, a magnetic circuit is formed as shown with an arrow mark in Fig. 9 (b) from the back side (Z-axis negative side) of the radiation image detecting device 6.

A magnetic substance 86 is a plate-shaped magnetic substance made of, for example, a permalloy type magnetic material, and is arranged under the lead sheet 37 (Z-axis negative side). A core 85 is a bar-shaped magnetic substance made of, for example, a permalloy type magnetic material, and is pasted on the magnetic substance 86. A non-contact power receiving section 46 is a coil wound around the core 85. A back side panel 82 is a part of a case body of the radiation image detecting device 6, and is made of a material which penetrates magnetic fluxes, such as a plastic.

A core 55 and a magnetic field forming section 54 shown in Fig. 9 (b) constitute a non-contact power transmitting section 52. The magnetic field forming section 54 is wound around the core 55. The magnetic field forming section 54 is connected to a cradle power source 53 which is not illustrated, and an alternating voltage is applied to the magnetic field forming section 54 from the cradle power source 53.

With this structure, since a relatively-bigger non-contact power receiving section 46 can be provided, it can charge up electricity still more efficiently. Moreover, since the relative magnetic permeability of the magnetic substance 86 is very large in comparison with the relative magnetic permeability of air, the magnetic substance 86 can allow a magnetic flux to pass sufficiently even with a small magnetic circuit. Therefore, even if the thickness of the magnetic substance 86 is taken into consideration, the thickness of the power receiving section structured with the magnetic substance 86, the core 85, and the non-contact power receiving section 46 can be made thin.

Next, another embodiment of a cradle 51 which can hold two case bodies 61 is described.

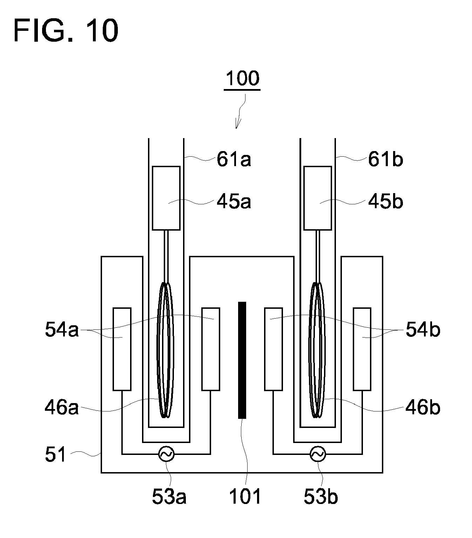

Fig. 10 is a sectional view showing the condition that two case bodies 61a and 61b are inserted and the two case bodies 61a and 61b are held by the cradle 51 of another embodiment.

Two concave portions are provided in the cradle 51 of another embodiment, and the two case bodies 61a and 61b can be held by the two concave portions. The field forming sections 54a and 54b are provided face to face so that the case bodies 61a and 61b of two radiation image detecting devices 6 may be inserted into two concave portions of the cradle 51, respectively.

When the cradle 51 holds the case bodies 61a and 61b, the field forming sections 54a and 54b are arranged so that magnetic fluxes generated in the field forming sections 54a and 54b may pass through non-contact power receiving sections 46a and 46b, respectively. A magnetic-shielding plate 101 is provided between the field forming section 54a and the field forming section 54b, and magnetic fluxes are prevented from leaking between the field forming section 54a and the field forming section 54b.

Thus, in this embodiment, electric power can be simultaneously supplied to the two radiation image detecting devices 6. Moreover, although the example to supply electric power to two radiation image detecting devices 6 simultaneously is explained in this embodiment, electric power can also be simultaneously supplied to much more radiation image detecting devices 6 with the similar structure.

As described above, according to the present invention, it is possible to provide a radiation image detecting device capable of performing non-contact charging efficiently, without enlarging the size, lowering the radiation shielding ability, and lowering the shock-proof.

## Claims

1. A radiation image detecting device, comprising:
a flat panel detector constituted with a plurality of elements arranged in a plane configuration so as to detect radiation having transmitted through a radiographic subject;
a signal processing section to process signals outputted from the flat panel detector;
a radiation shielding section to shield the signal processing section from radiation having transmitted through the flat panel detector;
a power source section to supply electric power to the flat panel detector and the signal processing section; and
a non-contact power receiving section to receive electric power supplied with a non-contact way in a form of a magnetic flux and to supply the electric power to the power source section;
wherein the non-contact power receiving section is arranged on a location where the magnetic flux is not blocked by the radiation shielding section.

2. The radiation image detecting device described in claim 1, further comprising:
a box to accommodate the flat panel detector, the signal processing section, the radiation shielding section, the power source section and the non-contact power receiving section therein,
wherein the non-contact power receiving section is arranged in a space between an inner side surface of the box and the radiation shielding section.

3. The radiation image detecting device described in claim 2, wherein the radiation shielding section is a shielding plate provided between the flat panel detector and the signal processing section, and the non-contact power receiving section is arranged in a space between the inner side surface of the box and an end of the shielding plate.

4. The radiation image detecting device described in claim 3, wherein a cushioning member for an impact force is provided to the inner side surface of the box, and the non-contact power receiving section is arranged in a space between the cushioning member and the end of the shielding plate.

5. The radiation image detecting device described in claim 2, wherein the non-contact power receiving section is arranged so as to oppose to a non-contact power transmitting section provided at the outside of the radiation image detecting device, and wherein the non-contact power transmitting section includes a primary side coil and the non-contact power receiving section includes a secondary side coil and an alternating voltage is induced on the non-contact power receiving section by a magnetic coupling between the primary side coil and the secondary side coil.

6. The radiation image detecting device described in claim 5, wherein the non-contact power transmitting section is provided in a box holding device having a concave portion, and when the box is held in the concave portion of the box holding device, the non-contact power receiving section is arranged in the box so as to oppose to the non-contact power transmitting section in the box holding device.

7. The radiation image detecting device described in claim 5, wherein the primary side coil of the non-contact power transmitting section is a pair of coils provided in the concave portion so as to oppose to each other, and when the box is held in the concave portion of the box holding device, the secondary side coil of the non-contact power receiving section is arranged in the box so as to position between the pair of coils.

8. The radiation image detecting device described in claim 7, wherein the secondary side coil of the non-contact power receiving section is arranged so as to form a magnetic path in a radiation irradiating direction.

9. The radiation image detecting device described in claim 7, wherein the secondary side coil of the non-contact power receiving section is arranged so as to form a magnetic path in a direction perpendicular to a radiation irradiating direction.
